(19) Europäisches Patentamt
European Patent Office
Office européen des brevets

(11) **EP 2 135 456 B1**

(12) **EUROPEAN PATENT SPECIFICATION**

(45) Date of publication and mention of the grant of the patent:
**03.05.2017 Bulletin 2017/18**

(21) Application number: **08726902.3**

(22) Date of filing: **17.03.2008**

(51) Int Cl.:
*H04N 19/597* *(2014.01)*　　*H04N 19/70* *(2014.01)*
*H04N 19/61* *(2014.01)*　　*H04N 19/114* *(2014.01)*

(86) International application number:
**PCT/US2008/003492**

(87) International publication number:
**WO 2008/123917 (16.10.2008 Gazette 2008/42)**

(54) **REFERENCE PICTURE LIST MANAGEMENT**

REFERENZBILDLISTENVERWALTUNG

GESTION DE LISTES D'IMAGES DE RÉFÉRENCE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.04.2007 US 921713 P**

(43) Date of publication of application:
**23.12.2009 Bulletin 2009/52**

(73) Proprietor: **Thomson Licensing**
**92130 Issy-les-Moulineaux (FR)**

(72) Inventors:
 • **PANDIT, Purvin, Bibhas**
 **Franklin Park, New Jersey 08823 (US)**
 • **YIN, Peng**
 **West Windsor, New Jersey 08550 (US)**

(74) Representative: **Le Dantec, Claude et al**
**TECHNICOLOR**
**1-5, rue Jeanne d'Arc**
**92130 Issy-les-Moulineaux (FR)**

(56) References cited:
　　**WO-A-2006/104326**　　　**US-A1- 2003 202 592**
　　**US-A1- 2007 030 356**

 • **CHUNBO ZHU ET AL: "Error Resilient Video Coding using Redundant Pictures" IMAGE PROCESSING, 2006 IEEE INTERNATIONAL CONFERENCE ON, IEEE, PI, 1 October 2006 (2006-10-01), pages 801-804, XP031048758 ISBN: 978-1-4244-0480-3**
 • **RICHARDSON I G: "frame and picture management" INTERNET CITATION, [Online] 29 January 2004 (2004-01-29), XP002435299 Retrieved from the Internet: URL:http://www.rgu.ac.uk/files/avc_picmana gement_draft1.pdf> [retrieved on 2007-05-29]**
 • **EMIN MARTINIAN ET AL: "V-Picture Syntax for Random Access in Multi-view Video Compression" VIDEO STANDARDS AND DRAFTS, no. M13121, 23 March 2006 (2006-03-23), XP030041790**

EP 2 135 456 B1

**Description**

TECHNICAL FIELD

The present principles relate generally to video encoding and decoding and, more particularly, to a method and apparatus for reference picture list management in multi-view coded video using high level syntax.

BACKGROUND OF THE INVENTION

In the current H.264 / MPEG-4 AVC based implementation of MVC, the reference software achieves multi-view prediction by encoding each view with a single encoder and taking into consideration the cross-view references. In addition MVC also decouples the frame_num and POC between the different views thus allowing pictures with the same frame_num and POC (for example, pictures belonging to different views) to be present in the Decoded Picture Buffer (DPB). These pictures are differentiated using the view_id associated with it.

The Reference Picture List Reordering commands that are used to reorder inter-view reference pictures imposes some restriction on the values of certain syntax elements and additionally does not allow to duplicate a picture with a particular view_id in the reference list. Duplication of a reference picture is useful, for example, in cases where a modified version of the reference picture is used as a reference picture along with the original reference picture. This is used in weighted prediction and adaptive reference filtering.

Document CHUNBO ZHU et al: "Error Resilient Video Coding using Redundant Pictures", IEEE International Conference on Image Processing, 2006, IEEE, PI, 1 October 2006 (2006-10-01), pages 801-804, XP031048758, ISBN: 978-1-4244-0480-3 relates to encoding and decoding redundant pictures to improve error resilience in a standard-compliant way. Document US 2007/030356 A1 relates to a method and system for processing multiview videos for view synthesis using side information.

SUMMARY OF THE INVENTION

In at least one implementation of the invention, a change to the high level syntax of the H.264/MPEG-4 AVC based Multiview Coding standard is made to allow for efficient management of the reference pictures lists. In particular, the invention allows for inter-view reference pictures to be duplicated in the final reference list by modifying the equation that is used to select the index of the inter-view picture that is to be added to the reference list. Duplication of a reference picture is useful, for example, in cases where a modified version of the reference picture is used as a reference picture along with the original reference picture. This is used in weighted prediction and adaptive reference filtering.

Reordering of reference pictures is also more efficiently implemented through an implementation of the invention. Reordering of reference pictures is useful, for example, to improve coding efficiency by enabling pictures that are more correlated to the current picture to be present in the lower indices of the reference picture list. In the MVC extension, a new set of RPLR commands were introduced to reorder inter-view reference pictures. This is shown in Table 2.

In at least one implementation of the invention, the equations specified in the derivation of the view index value in the current MVC specification are modified to allow management of the reference pictures lists. This modification removes the restrictions imposed in the current specification and additionally allows duplicating an interview reference picture in the reference list.

BRIEF DESCRIPTION OF THE DRAWINGS

Table 1 shows the Reference picture list reordering syntax in AVC.
Table 2 shows the Reference picture list reordering syntax in MVC.
Table 3 shows the Reordering_of_pics_nums_idc operations for reordering of reference picture lists in MVC.

DETAILED DESCRIPTION OF THE INVENTION

In at least one implementation of the invention, a change to the high level syntax of the H.264/MPEG-4 AVC based Multiview Coding standard is made to allow for efficient management of the reference pictures lists. In particular, the invention allows for inter-view reference pictures to be duplicated in the final reference list by modifying the equation that is used to select the index of the inter-view picture that is to be added to the reference list.

In the current H.264 / MPEG-4 AVC based implementation of MVC, the reference software achieves multi-view prediction by encoding each view with a single encoder and taking into consideration the cross-view references. In addition MVC also decouples the frame_num and POC between the different views thus allowing pictures with the same frame_num and POC (for example, pictures belonging to different views) to be present in the DPB. These pictures are differentiated using the view_id associated with it.

The Reference Picture List Reordering commands that are used to reorder inter-view reference pictures imposes some restriction on the values of certain syntax elements and additionally does not allow to duplicate a picture with a particular view_id in the reference list. Duplicating of a reference picture is useful, for example, in cases where a modified version of the reference picture is used as a reference picture along with the original reference picture. This is used in weighted prediction and adaptive reference filtering.

H.264/MPEG-4 AVC enables encoder/decoder to change default order of reference pictures in list0 (and list1 for Bslices) temporarily for the next decoded slice. This is achieved through Reference Picture List Reordering (RPLR) commands present in the slice header. These RPLR commands are shown in the syntax table for RPLR in Table 1.

Reordering of reference pictures is useful, for example, to improve coding efficiency by enabling pictures that are more correlated to the current picture to be present in the lower indices of the reference picture list. In the MVC extension, a new set of RPLR commands were introduced to reorder inter-view reference pictures. This is shown in Table 2.

The syntax **abs_diff_view_idx_minus1** has the following semantics.

**abs_diff_view_idx_minus1** plus 1 specifies the absolute difference between the view index of the picture to put to the current index in the reference picture list and the view index prediction value. abs_diff_view_idx_minus1 shall be in the range of 0 to num_anchor_refs_IX[curr_view_id]-1 if the current decoding slice belongs to an anchor picture, or 0 to num_non_anchor_refs_IX[curr_view_id]-1 if it belongs to a non-anchor picture. curr_view_id is equal to the view_id of the view containing the current slice. The allowed values of abs_diff_view_idx_minus1 are further restricted as specified in subclause H.8.2.2.3 of MVC.

A view index of an inter-view picture indicates the order of the view_id of the inter-view picture occurring in the dependency for current decoding view in MVC SPS extension. For a picture with view index equal to view_index, its view_id is equal to anchor_ref _IX[curr_view_id][view_index] if the current coding slice belongs to an anchor picture, or is equal to non_anchor_ref _IX[curr_view_id][view_index] if it belongs to a non-anchor picture.

Table 1: Reference picture list reordering syntax in AVC

| ref_pic_list_reordering( ) { | C | Descriptor |
|---|---|---|
| if(slice_type != I && slice_type != SI && slice_type != EI) {   /* slice_type EI is specified in Annex F */ | | |
| **ref_pic_list_reordering_flag_l0** | 2 | u(l) |
| if(ref_pic_list_reordering_flag_l0) | | |
| do { | | |
| **reordering_of_pic_nums_idc** | 2 | ue(v) |
| if( reordering_of_pic_nums_idc = = 0 ||   reordering_of_pic_nums_idc = = 1) | | |
| **abs_diff_pic_num_minus1** | 2 | ue(v) |
| else if(reordering_of_pic_nums_idc = = 2) | | |
| **long_term_pic_num** | 2 | ue(v) |
| } while( reordering_of_pic_nums_idc != 3) | | |
| } | | |
| if( slice_type = = B || slice_type = = EB) {   /* slice_type EB is specified in Annex F */ | | |
| **ref_pic_list_reordering_flag_l1** | 2 | u(l) |
| if( ref_pic_list_reordering_flag_l1) | | |
| do { | | |
| **reordering_of_pic_nums_idc** | 2 | ue(v) |

(continued)

| | C | Descriptor |
|---|---|---|
| if( reordering_of_pic_nums_idc = = 0 \|\| reordering_of_pic_nums_idc = = 1 ) | | |
| **abs_diff_pic_num_minus1** | 2 | ue(v) |
| else if( reordering_of_pic_nums_idc = = 2 ) | | |
| **long_term_pic_num** | 2 | ue(v) |
| } while( reordering_of_pic_nums_idc != 3 ) | | |
| } | | |
| } | | |

Table 2: Reference picture list reordering syntax in MVC

| ref_pic_list_reordering( ) { | C | Descriptor |
|---|---|---|
| if( slice_type != I && slice_type != ) { | | |
| **ref_pic_list_reordering_flag_l0** | 2 | u(l) |
| if( ref_pic_list_reordering_flag_l0 ) | | |
| do { | | |
| **reordering_of_pic_nums_idc** | 2 | ue(v) |
| if( reordering_of_pic_nums_idc = = 0 \|\| reordering_of_pic_nums_idc = = 1 ) | | |
| **abs_diff_pic_num_minus1** | 2 | ue(v) |
| else if( reordering_of_pic_nums_idc = = 2 ) | | |
| **long_term_pic_num** | 2 | ue(v), |
| if (reordering_of_pic_nums_idc = = 4 \|\| reordering_of_pic_nums_idc = = 5) | | |
| **abs_diff_view_idx_minus1** | 2 | ue(v) |
| } while(reordering_of_pic_nums_idc != 3) | | |
| } | | |
| if( slic_type = = B \|\| slice_type = = EB ) { | | |
| **ref_pic_list_reordering_flag_l1** | 2 | u(l) |
| if( ref_pic_list_reordering_flag_l1 ) | | |
| do { | | |
| **reordering_of_pic_nums_idc** | 2 | ue(v) |
| if( reordering_of_pic_nums_idc = = 0 \|\| reordering_of_pic_nums_idc = = 1 ) | | |
| **abs_diff_pic_num_minus1** | 2 | ue(v) |
| else if( reordering_of_pic_nums_idc = = 2 ) | | |
| **long_term_pic_num** | 2 | ue(v) |
| if (reordering_of_pic_nums_idc = = 4 \|\| reordering_of_pic_nums_idc = = 5) | | |
| **abs_diff_view_idx_minus1** | 2 | ue(v) |
| } while( reordering_of_pic_nums_idc != 3 ) | | |

(continued)

| } | | |
|---|---|---|
| } | | |

Table 3: reordering_of_pic_nums_idc operations for reordering of reference picture lists in MVC

| reordering_of_pic_nums_idc | Reordering specified |
|---|---|
| 0 | abs_diff_pic_num_minus1 is present and corresponds to a difference to subtract from a picture number prediction value |
| 1 | abs_diff_pic_num_minus1 is present and corresponds to a difference to add to a picture number prediction value |
| 2 | long_term_pic_num is present and specifies the long-term picture number for a reference picture |
| 3 | End loop for reordering of the initial reference picture list |
| 4 | abs_diff_view_idx_minus1 is present and corresponds to a difference to subtract from a view index prediction value |
| 5 | abs_diff_view_idx_minus1 is present and corresponds to a difference to add to a view index prediction value |

In at least one implementation, the invention modifies the equations specified in the derivation of the view index value in the current MVC specification for management of the reference pictures lists. This modification removes the restrictions imposed in the current specification and additionally allows duplicating an interview reference picture in the reference list.

The reordering process of inter-view pictures is currently specified as:

Inputs to this process are reference picture list RefPicListX (with X being 0 or 1) and an index refIdxLX into this list.

Outputs of this process are a possibly modified reference picture list RefPicListX (with X being 0 or 1) and the incremented index refIdxLX.

The variable picViewIdxLX is derived as follows.

- If reordering_of_pic_nums_idc is equal to 4

$$picViewIdxLX = picViewIdxLXPred - ( abs\_diff\_view\_idx\_minus1 + 1 ) \quad (1)$$

- Otherwise (reordering_of_pic_nums_idc is equal to 5),

$$picViewIdxLX = picViewIdxLXPred + ( abs\_diff\_view\_idx\_minus1 + 1 ) \quad (2)$$

picViewIdxLXPred is the prediction value for the variable picViewIdxLX. When the process specified in this subclause is invoked the first time for a slice (that is, for the first occurrence of reordering_of_pic_nums_idc equal to 4 or 5 in the ref_pic_list_reordering() syntax), picViewIdxL0Pred and picViewIdxL1Pred are initially set equal to 0. When the process specified in this subclause is invoked the first time for a slice and reordering_of_pic_nums_idc is equal to 4 and the followed abs_diff_view_idx_minus1 is equal to 0, the picViewIdxLX is derived directly as 0 without using the above equations. After each assignment of picViewIdxLX, the value of picViewIdxLX is assigned to picViewIdx-LXPred.

The following procedure is conducted to place the inter-view picture with view index equal to picViewIdxLX into the index position refIdxLX, shift the position of any other remaining pictures to later in the list, as follows.

```
TargetViewID =num_multiview_refs_for_listX[picViewIdxLX]
for(cIdx = num_ref_idx_IX_active_minus1 + 1; cIdx > refIdxLX; cIdx--)
    RefPicListX[cIdx] = RefPicListX[cIdx - 1]
RefPicListX[refIdxLX++] = inter-view reference picture with view id equal to
TargetViewID
nIdx = refIdxLX
for(cIdx = refIdxLX; cIdx <= num_ref_idx_IX_active_minus1 + 1; cIdx++)
    if(ViewID(RefPicListX[cIdx]) != TargetViewID ||
PictureOrderCnt(RefPicListX[cIdx])!=CurrPOC)
        RefPicListX[nIdx++] = RefPicListX[cIdx]
```

Where CurrPOC indicates the PicOrderCnt() of the current decoding picture.

As seen from the above description that it imposes the following restriction: When the process specified in this subclause is invoked the first time for a slice and reordering_of_pic_nums_idc is equal to 4 and the next syntax element of abs_diff_view_idx_minus1 is equal to 0, then the picViewIdxLX is derived directly as 0 without using the above equations. This precludes the possibility of having a negative value for picViewIdxLX if, for example, picViewIdxLXPred and abs_diff_view_idx_minus1 both have initial values of zero.

Additionally using the equations of (1) and (2) it is not possible to duplicate the entries in the reference list since these equations will generate incorrect values.

In order to address these issues, at least one implementation proposes to modify the two equations (1) and (2) in the following way.

The variable picViewIdxLX is derived as follows.

- If reordering_of_pic_nums_idc is equal to 4

$$\text{if(picViewIdxLXPred} - ( \text{abs\_diff\_view\_idx\_minus1} + 1 ) < 0)$$

$$\text{picViewIdxLX} = \text{picViewIdxLXPred} - ( \text{abs\_diff\_view\_idx\_minus1} + 1 ) + \text{MaxViewIdx} \quad (3)$$

else

$$\text{picViewIdxLX} = \text{picViewIdxLXPred} - ( \text{abs\_diff\_view\_idx\_minus1} + 1 )$$

- Otherwise (reordering_of_pic_nums_idc is equal to 5),

$$\text{if(picViewIdxLXPred} + ( \text{abs\_diff\_view\_idx\_minus1} + 1 ) >= \text{MaxViewIdx})$$

$$\text{picViewIdxLX} = \text{picViewIdxLXPred} + ( \text{abs\_diff\_view\_idx\_minus1} + 1 ) - \text{MaxViewIdx} \quad (4)$$

else

$$\text{picViewIdxLX} = \text{picViewIdxLXPred} + ( \text{abs\_diff\_view\_idx\_minus1} + 1 )$$

MaxViewIdx is a variable, and the value MaxViewIdx in equations (3) and (4) is derived using the syntax from the SPS MVC extension as follows:

If the current picture is an anchor picture then,

$$MaxViewIdx = num\_anchor\_refs\_lX[curr\_view\_id]$$

Otherwise,

$$MaxViewIdx = num\_non\_anchor\_refs\_lX[curr\_view\_id]$$

Clearly, both the encoder and the decoder can derive the values of MaxViewIdx.

An advantage of this method is that by signaling abs_diff_view_idx_minus1 to a value equal to (MaxViewIdx-1) it is possible to duplicate a particular view index value. That is, by using the syntax of Table 2 to signal such a value, then a particular view index value will be duplicated in the reference list of the decoder because picViewIdxLX = picViewIdxLXPred.

Additionally, this method removes the constraint that was originally imposed on the value of abs_diff_view_idx_minus1 when "reordering_of_pic_nums_idc = 4" is the first command for the slice. That is, picViewIdxLX need not be automatically set to zero. This follows because the first "if" statement just above equation (3) catches the occurrence of a potentially invalid value for picViewIdxLX (as computed with the existing equation (1)).

Features and aspects described herein allow, for example, duplicating an interview reference picture in a reference picture list. Such duplication may refer merely to duplicating a pointer to an actual reference picture (that includes the pixel values), in which case the reference picture list may, for example, include a series of pointers to one or more actual reference pictures. The actual reference pictures may be stored, for example, in a decoded picture buffer. In such an implementation, one or more of the pointers in the reference picture list are duplicated so that the pointers point to the same actual reference picture.

Duplication of interview reference pictures in a reference picture list may be used, for example, in performing adaptive reference filtering as described in U.S. Provisional Application Serial Number 60/807,645, filed July 18, 2006, and titled "Adaptive Reference Frame Filtering for Video Coding", the entire contents of which are hereby incorporated by reference.

It should be clear that implementations may also duplicate the actual reference picture that is pointed to by multiple pointers in a reference picture list. Further, implementations may maintain a reference picture list that includes the actual reference pictures rather than merely pointers to the actual reference pictures.

Features and aspects of described implementations may also be adapted for other implementations. For example, other encoding/decoding processes that maintain a list of reference pictures may allow for duplication of a reference picture in the list. Such other encoding/decoding processes may allow for such duplication using, for example, explicit signaling or implicit signaling. As an example of explicit signaling, an implementation may include syntax with every encoded picture indicating whether a particular reference picture is to be duplicated in the list.

The implementations described herein may be implemented in, for example, a method or process, an apparatus, or a software program. Even if only discussed in the context of a single form of implementation (for example, discussed only as a method), the implementation or features discussed may also be implemented in other forms (for example, an apparatus or program). An apparatus may be implemented in, for example, appropriate hardware, software, and firmware. The methods may be implemented in, for example, an apparatus such as, for example, a decoder, an encoder, or some other processing device. Additionally, the methods may be implemented by instructions being performed by a processing device or other apparatus, and such instructions may be stored on a computer readable medium such as, for example, a CD or other computer readable storage device, or an integrated circuit.

As should be evident to one of skill in the art, implementations may also produce a signal formatted to carry information that may be, for example, stored or transmitted. The information may include, for example, instructions for performing a method, or data produced by one of the described implementations. For example, a signal may be formatted to carry as data the values for the explicit signaling syntax.

Further, other implementations are contemplated by this application. For example, additional implementations may be created by combining, deleting, modifying, or supplementing various features of the disclosed implementations.

The claims provides a short list of various implementations. The list is not intended to be exhaustive but merely to provide a short description of a small number of the many possible implementations.

**Claims**

1. A method for managing a reference picture list in multiview video coding,
   **characterized in that** it comprises:

   - providing information in a bitstream that indicates if a particular interview reference picture is to be duplicated in the reference picture list;
   - generating an index value for an interview reference picture, said picture to be added to said reference picture list, by performing, conditionally on further information in the bitstream, an operation of either (i) adding to a view index prediction value a value corresponding to a difference to the view index prediction value and subtracting a maximum view index value or (ii) subtracting from a view index value a value corresponding to a difference from the view index prediction value and adding a maximum view index value; and
   - re-ordering reference pictures in the reference picture list to allow the duplication of the particular interview reference picture in the reference picture list when the generated index value for the interview reference picture equals the index value of the particular interview reference picture.

2. The method of Claim 1, wherein the maximum view index value is determined from the Sequence Parameter Set syntax.

3. The method of Claim 2, wherein the maximum view index value can be different for anchor and non-anchor pictures.

4. An encoder **characterized in that** it is
   configured to achieve duplication of a particular interview reference picture in a reference picture list, said encoder comprising means for:

   - extracting information from a bitstream that indicates if a particular interview reference picture is to be duplicated in the reference picture list;
   - generating an index value for an interview reference picture, said interview reference picture to be added to said reference picture list, by performing, conditionally on further information in the bitstream, an operation of either (i) adding to a view index prediction value a value corresponding to a difference to the view index prediction value and subtracting a maximum view index value or (ii) subtracting from a view index prediction value a value corresponding to a difference from the view index prediction value and adding a maximum view index value; and
   - re-ordering reference pictures in the reference picture list to allow the duplication of the particular interview reference picture in the reference picture list when the generated index value for the interview reference picture equals the index value of the particular interview reference picture.

5. The encoder of Claim 4, wherein said encoder provides information that includes a value of an explicit signaling syntax.

6. A decoder **characterized in that** it is configured to duplicate a particular interview reference picture in a reference picture list by:

   - providing information in a bitstream that indicates if a particular interview reference picture is to be duplicated in the reference picture list;
   - generating an index value for an interview reference picture, said interview reference picture to be added to said reference picture list, by performing, conditionally on further information in the bitstream, an operation of either (i) adding to a view index prediction value a value corresponding to a difference to the view index prediction value and subtracting a maximum view index value or (ii) subtracting from a view index prediction value a value corresponding to a difference from the view index prediction value and adding a maximum view index value; and
   - re-ordering reference pictures in the reference picture list to allow the duplication of the particular interview reference picture in the reference picture list when the generated index value for the interview reference picture equals the index value of the particular interview reference picture.

7. A computer readable medium **characterized in that** it includes instructions for causing an interview reference picture to be duplicated in a reference picture list by implementing the method of Claim 1.

8. The computer readable medium of Claim 7, wherein said instructions cause the interview reference

picture to be duplicated in response to receiving a signal instructing such duplication.
Reference picture list reordering syntax in AVC

*Table 1*

| ref_pic_list_reordering() { | C | Descriptor |
|---|---|---|
| if( slice_type != I && slice_type != SI && slice_type != EI ) {<br>/* slice_type EI is specified in Annex F */ | | |
| **ref_pic_list_reordering_flag_l0** | 2 | u(l) |
| if( ref_pic_list_reordering_flag_l0 ) | | |
| do { | | |
| **reordering_of_pic_nums_idc** | 2 | ue(v) |
| if( reordering_of_pic_nums_idc = = 0 ||<br>reordering_of_pic_nums_idc = = 1) | | |
| **abs_diff_pic_num_minus1** | 2 | ue(v) |
| else if( reordering_of_pic_nums_idc = = 2 ) | | |
| **long_term_pic_num** | 2 | ue(v) |
| } while(reordering_of_pic_nums_idc != 3) | | |
| } | | |
| if(slice_type = = B || slice_type = = EB) {<br>/* slice type EB is specified in Annex F */ | | |
| **ref_pic_list_reordering_flag_l1** | 2 | u(l) |
| if( ref_pic_list_reordering_flag_l1 ) | | |
| do { | | |
| **reordering_of_pic_nums_idc** | 2 | ue(v) |
| if( reordering_of_pic_nums_idc = = 0 ||<br>reordering_of_pic_nums_idc == 1 ) | | |
| **abs_diff_pic_num_minus1** | 2 | ue(v) |
| else if(reordering_of_pic_nums_idc = = 2) | | |
| **long_term_pic_num** | 2 | ue(v) |
| } while( reordering_of_pic_nums_idc != 3 ) | | |
| } | | |
| } | | |

Reference picture list reordering syntax in MVC

*Table 2*

| ref_pic_list_reordering() { | C | Descriptor |
|---|---|---|
| if( slice_type != I && slice_type != ) { | | |
| **ref_pic_list_reordering_flag_l0** | 2 | u(l) |
| if( ref_pic_list_reordering_flag_l0 ) | | |
| do { | | |
| **reordering_of_pic_nums_idc** | 2 | ue(v) |
| if( reordering_of_pic_nums_idc = = 0 || | | |

(continued)

| | | |
|---|---|---|
| reordering_of_pic_nums_idc = = 1 ) | | |
| **abs_diff_pic_num_minus1** | 2 | ue(v) |
| else if( reordering_of_pic_nums_idc = = 2 ) | | |
| **long_term_pic_num** | 2 | ue(v) |
| if (reordering_of_pic_nums_idc = = 4 \|\| reordering_of_pic_nums_idc = = 5) | | |
| **abs_diff_view_idx_minus1** | 2 | ue(v) |
| } while( reordering_of_pic_nums_idc != 3 ) | | |
| } | | |
| if( slice_type = = B \|\| slice_type = = EB ) { | | |
| **ref_pic_list_reordering_flag_l1** | 2 | u(l) |
| if( ref_pic_list_reordering_flag_l1 ) | | |
| do { | | |
| **reordering_of_pic_nums_idc** | 2 | ue(v) |
| if( reordering_of_pic_nums_idc = = 0 \|\| reordering_of_pic_nums_idc = = 1 ) | | |
| **abs_diff_pic_num_minus1** | 2 | ue(v) |
| else if( reordering_of_pic_nums_idc = = 2 ) | | |
| **long_term_pic_num** | 2 | ue(v) |
| if (reordering_of_pic_nums_idc = = 4 \|\| reordering_of_pic_nums_idc = = 5) | | |
| **abs_diff_view_idx_minus1** | 2 | ue(v) |
| } while(reordering_of_pic_nums_idc != 3) | | |
| } | | |
| } | | |

Reordering_of_pic_nums_idc operations for reordering of reference picture lists in MVC

*Table 3*

| reordering_of_pic_nums_idc | Reordering specified |
|---|---|
| 0 | abs_diff_pic_num_minus1 is present and corresponds to a difference to subtract from a picture number prediction value |
| 1 | abs_diff_pic_num_minus1 is present and corresponds to a difference to add to a picture number prediction value |
| 2 | long_term_pic_num is present and specifies the long-term picture number for a reference picture |
| 3 | End loop for reordering of the initial reference picture list |
| 4 | abs_diff_view_idx_minus1 is present and corresponds to a difference to subtract from a view index prediction value |
| 5 | abs_diff_view_idx_minus1 is present and corresponds to a difference to add to a view index prediction value |

**Patentansprüche**

1. Verfahren zum Managen einer Referenzbildliste bei der Multi-view-Videocodierung, **dadurch gekennzeichnet, dass** das Verfahren umfasst:

   - Bereitstellen von Informationen in einem Bitstrom, die angeben, ob ein bestimmtes Inter-view-Referenzbild in der Referenzbildliste dupliziert werden soll;
   - Erzeugen eines Indexwerts für ein Inter-view-Referenzbild, wobei das Bild zu der Referenzbildliste hinzugefügt werden soll, durch das Ausführen einer Operation entweder des (i) Addierens eines Werts, der einer Differenz zu dem Ansichtsindex-Prädiktionswert entspricht, zu einem Ansichtsindex-Prädiktionswert und Subtrahieren eines maximalen Ansichtsindexwerts oder (ii) Subtrahierens eines Werts, der einer Differenz von dem Ansichtsindex-Prädiktionswert entspricht, von einem Ansichtsindexwert und Addieren eines maximalen Ansichtsindexwerts, unter dem Vorbehalt weiterer Informationen in dem Bitstrom; und
   - Umordnen von Referenzbildern in der Referenzbildliste, um die Duplizierung des bestimmten Inter-view-Referenzbilds in der Referenzbildliste zu ermöglichen, wenn der erzeugte Indexwert für das Inter-view-Referenzbild gleich dem Indexwert des bestimmten Inter-view-Referenzbilds ist.

2. Verfahren nach Anspruch 1, wobei der maximale Ansichtsindexwert aus der Sequenzparametermengensyntax bestimmt wird.

3. Verfahren nach Anspruch 2, wobei der maximale Ansichtsindexwert für Anker- und Nicht-Anker-Bilder verschieden sein kann.

4. Codierer, **dadurch gekennzeichnet, dass** er zum Erzielen einer Duplizierung eines bestimmten Inter-view-Referenzbilds in einer Referenzbildliste konfiguriert ist, wobei der Codierer Mittel umfasst zum:

   - Extrahieren von Informationen von einem Bitstrom, die angeben, ob ein bestimmtes Inter-view-Referenzbild in der Referenzbildliste dupliziert werden soll;
   - Erzeugen eines Indexwerts für ein Inter-view-Referenzbild, wobei das Inter-view-Referenzbild zu der Referenzbildliste hinzugefügt werden soll, durch das Ausführen einer Operation entweder des (i) Addierens eines Werts, der einer Differenz zu dem Ansichtsindex-Prädiktionswert entspricht, zu einem Ansichtsindex-Prädiktionswert und Subtrahieren eines maximalen Ansichtsindexwerts oder (ii) Subtrahierens eines Werts, der einer Differenz von dem Ansichtsindex-Prädiktionswert entspricht, von einem Ansichtsindex-Prädiktionswert und Addieren eines maximalen Ansichtsindexwerts, unter dem Vorbehalt weiterer Informationen in dem Bitstrom; und
   - Umordnen von Referenzbildern in der Referenzbildliste, um die Duplizierung des bestimmten Inter-view-Referenzbilds in der Referenzbildliste zu ermöglichen, wenn der erzeugte Indexwert für das Inter-view-Referenzbild gleich dem Indexwert des bestimmten Inter-view-Referenzbilds ist.

5. Codierer nach Anspruch 4, wobei der Codierer Informationen bereitstellt, die einen Wert einer expliziten Signalisierungssyntax enthalten.

6. Decodierer, **dadurch gekennzeichnet, dass** er zum Duplizieren eines bestimmten Inter-view-Referenzbilds in einer Referenzbildliste konfiguriert ist, durch:

   - Bereitstellen von Informationen in einem Bitstrom, die angeben, ob ein bestimmtes Inter-view-Referenzbild in der Referenzbildliste dupliziert werden soll;
   - Erzeugen eines Indexwerts für ein Inter-view-Referenzbild, wobei das Inter-view-Referenzbild zu der Referenzbildliste hinzugefügt werden soll, durch das Ausführen einer Operation entweder des (i) Addierens eines Werts, der einer Differenz zu dem Ansichtsindex-Prädiktionswert entspricht, zu einem Ansichtsindex-Prädiktionswert und Subtrahieren eines maximalen Ansichtsindexwerts oder (ii) Subtrahierens eines Werts, der einer Differenz von dem Ansichtsindex-Prädiktionswert entspricht, von einem Ansichtsindex-Prädiktionswert und Addieren eines maximalen Ansichtsindexwerts, unter dem Vorbehalt weiterer Informationen in dem Bitstrom; und
   - Umordnen von Referenzbildern in der Referenzbildliste, um die Duplizierung des bestimmten Inter-view-Referenzbilds in der Referenzbildliste zu ermöglichen, wenn der erzeugte Indexwert für das Inter-view-Referenzbild gleich dem Indexwert des bestimmten Inter-view-Referenzbilds ist.

7. Computerlesbares Medium, **dadurch gekennzeichnet, dass** es Anweisungen enthält, um zu veranlassen, dass ein Inter-view-Referenzbild in einer Referenzbildliste durch Implementierung des Verfahrens nach Anspruch 1 dupliziert wird.

8. Computerlesbares Medium nach Anspruch 7, wobei die Anweisungen veranlassen, dass das Inter-view-Referenzbild in Ansprechen auf den Empfang eines Signals, das diese Duplizierung anweist, dupliziert wird.

## Revendications

1. Procédé de gestion d'une liste d'images de référence dans un codage vidéo multivues, **caractérisé en ce qu'**il comprend :

   - la transmission d'informations dans un train de bits indiquant si une image de référence entre-vues spécifique doit être dupliquée dans la liste d'images de référence ;
   - la génération d'une valeur d'index pour une image de référence entre-vues, ladite image devant être ajoutée à ladite liste d'images de référence, par l'exécution, sous réserve d'informations supplémentaires dans le train de bits, d'une opération consistant à (i) ajouter à une valeur de prédiction d'index de vue une valeur correspondant à la différence avec la valeur de prédiction d'index de vue et soustraire une valeur d'index de vue maximale ou (ii) soustraire d'une valeur d'index de vue une valeur correspondant à la différence avec la valeur de prédiction d'index de vue et ajouter une valeur d'index de vue maximale ; et
   - la réorganisation des images de référence dans la liste d'images de référence pour permettre la duplication de l'image de référence entre-vues spécifique dans la liste d'images de référence lorsque la valeur d'index générée pour l'image de référence entre-vues est égale à la valeur d'index de l'image de référence entre-vues spécifique.

2. Procédé selon la revendication 1, dans lequel la valeur d'index de vue maximale est déterminée à partir de la syntaxe d'ensemble de paramètres de séquence.

3. Procédé selon la revendication 2, dans lequel la valeur d'index de vue maximale peut être différente pour les images d'ancrage et les images de non-ancrage.

4. Encodeur **caractérisé en ce qu'**il est configuré pour exécuter la duplication d'une image de référence entre-vues spécifique dans une liste d'images de référence, ledit encodeur comprenant des moyens pour :

   - extraire des informations d'un train de bits indiquant si une image de référence entre-vues spécifique doit être dupliquée dans la liste d'images de référence ;
   - générer une valeur d'index pour une image de référence entre-vues, ladite image de référence entre-vues devant être ajoutée à ladite liste d'images de référence, par l'exécution, sous réserve d'informations supplémentaires dans le train de bits, d'une opération consistant à (i) ajouter à une valeur de prédiction d'index de vue une valeur correspondant à la différence avec la valeur de prédiction d'index de vue et soustraire une valeur d'index de vue maximale ou (ii) soustraire d'une valeur de prédiction d'index de vue une valeur correspondant à la différence avec la valeur de prédiction d'index de vue et ajouter une valeur d'index de vue maximale ; et
   - réorganiser les images de référence dans la liste d'images de référence pour permettre la duplication de l'image de référence entre-vues spécifique dans la liste d'images de référence lorsque la valeur d'index générée pour l'image de référence entre-vues est égale à la valeur d'index de l'image de référence entre-vues spécifique.

5. Encodeur selon la revendication 4, dans lequel ledit encodeur fournit des informations incluant une valeur d'une syntaxe de signalisation explicite.

6. Décodeur **caractérisé en ce qu'**il est configuré pour dupliquer une image de référence entre-vues spécifique dans une liste d'images de référence en :

   - transmettant des informations dans un train de bits indiquant si une image de référence entre-vues spécifique doit être dupliquée dans la liste d'images de référence ;
   - générant une valeur d'index pour une image de référence entre-vues, ladite image de référence entre-vues devant être ajoutée à ladite liste d'images de référence, par l'exécution, sous réserve d'informations supplémentaires dans le train de bits, d'une opération consistant à (i) ajouter à une valeur de prédiction d'index de vue une valeur correspondant à la différence avec la valeur de prédiction d'index de vue et soustraire une valeur d'index de vue maximale ou (ii) soustraire d'une valeur de prédiction d'index de vue une valeur correspondant à la différence avec la valeur de prédiction d'index de vue et ajouter une valeur d'index de vue maximale ; et
- réorganisant les images de référence dans la liste d'images de référence pour permettre la duplication de l'image de référence entre-vues spécifique dans la liste d'images de référence lorsque la valeur d'index générée pour l'image de référence entre-vues est égale à la valeur d'index de l'image de référence entre-vues spécifique.

7. Support lisible par ordinateur **caractérisé en ce qu'**il inclut des instructions entraînant la duplication d'une image de référence entre-vues dans une liste d'images de référence en implémentant le procédé selon la revendication 1.

8. Support lisible par ordinateur selon la revendication 7, dans lequel lesdites instructions entraînent la duplication de l'image de référence entre-vues en réponse à la réception d'un signal ordonnant cette duplication.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007030356 A1

- US 80764506 P

**Non-patent literature cited in the description**

- Error Resilient Video Coding using Redundant Pictures. **CHUNBO ZHU et al.** IEEE International Conference on Image Processing. IEEE, 01 October 2006, 801-804